(19) **Europäisches Patentamt / European Patent Office / Office européen des brevets**

(11) **EP 4 330 452 B1**

(12) **EUROPEAN PATENT SPECIFICATION**

(45) Date of publication and mention of the grant of the patent:
**30.07.2025 Bulletin 2025/31**

(21) Application number: **22720742.0**

(22) Date of filing: **27.04.2022**

(51) International Patent Classification (IPC):
**C09K 11/64** (2006.01)   **D01F 2/02** (2006.01)
**D01F 1/10** (2006.01)   **D01D 5/06** (2006.01)
**D01F 1/02** (2006.01)   **D01D 1/02** (2006.01)
**C09K 9/00** (2006.01)

(52) Cooperative Patent Classification (CPC):
**D01F 2/02; C09K 9/00; C09K 11/646; D01D 1/02; D01D 5/06; D01F 1/02; D01F 1/10; D01F 1/106**

(86) International application number:
**PCT/FI2022/050272**

(87) International publication number:
**WO 2022/229509 (03.11.2022 Gazette 2022/44)**

(54) **UV-SENSITIVE MAN-MADE CELLULOSE TEXTILE FIBER**

UV-EMPFINDLICHE KÜNSTLICHE CELLULOSE-TEXTILFASERN

FIBRE TEXTILE DE CELLULOSE SYNTHÉTIQUE SENSIBLE AUX UV

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2021 FI 20215506**

(43) Date of publication of application:
**06.03.2024 Bulletin 2024/10**

(73) Proprietors:
• **Turun yliopisto**
  **20014 Turun yliopisto (FI)**
• **Aalto University Foundation sr**
  **00076 Aalto (FI)**

(72) Inventors:
• **LASTUSAARI, Mika**
  **20740 Turku (FI)**

• **PÖNKKÄ, Isabella**
  **20500 Turku (FI)**
• **VUORI, Sami**
  **21530 Paimio (FI)**
• **SAIRANEN, Emma**
  **00076 Aalto (FI)**
• **FANG, Wenwen**
  **00076 Aalto (FI)**
• **RISSANEN, Marja**
  **00076 Aalto (FI)**
• **SIXTA, Herbert**
  **00076 Aalto (FI)**

(74) Representative: **Papula Oy**
  **P.O. Box 981**
  **00101 Helsinki (FI)**

(56) References cited:
**EP-A1- 3 795 653**

## Description

### TECHNICAL FIELD

The present disclosure relates to a spun fiber comprising cellulose fiber doped with an optically active material, a UV-sensitive yarn comprising the spun fiber, and a UV-sensitive fabric comprising the spun fiber. The present disclosure further relates to a method for preparing a spun fiber comprising cellulose fiber doped with an optically active material. Additionally, the present disclosure relates to garments or clothing comprising a UV-sensitive spun fiber.

### BACKGROUND

Sustainability is a hot topic in the textile industry with an urgent need to transform the growing sector into one which operates within the planetary boundaries. Ioncell® process is a potential new method for producing environmentally friendly textiles, which address both environmental impacts of textile fiber production and offers a platform for more sustainable raw material use. Because of this the Ioncell® process provides an interesting platform for exploring opportunities of smart textile production.

It has been previously shown that additives can be incorporated into Ioncell® fibers during the spinning process. Compared to traditional textile finishing processes, additive incorporation during spinning allows the production of more durable functionalities in textiles in a more efficient and sustainable way. For instance, when the additive is incorporated in the fiber structure, the washing and rubbing fastness are increased compared to additives on the fiber surface.

One potentially interesting functionality in textiles is UV sensing. UV radiation causes health hazards like skin damage and damage to the DNA. Therefore, there is an emerging demand to protect people, especially children, from excess exposure to UV radiation. Easy UV detection in clothing could warn users about harmful radiation dosage and remind about protective behaviour like moving into the shade or applying sunscreen.

UV sensitive textiles have been researched mainly as aesthetic components, but research has also shown that fibers that react to UV irradiation by colour change could possibly be used as wearable UV sensor. Current research has mainly focused on organic photochromic dyes. However, some of the photochromic dyes and their degradation compounds are toxic, which is a problem for applications in the textile industry.

Further relevant information can be found in document EP 3 795 653 A1.

### SUMMARY

A spun fiber comprising cellulose fiber doped with an optically active material is disclosed. The optically active material may be represented by the following formula (I)

$$(M')_8(M''M''')_6O_{24}(X,X')_2{:}M''''\qquad\text{formula (I)}$$

wherein

M' represents a monoatomic cation of an alkali metal selected from Group 1 of the IUPAC periodic table of the elements;

M'' represents a trivalent monoatomic cation of an element selected from Group 13 of the IUPAC periodic table of the elements, or of a transition element selected from any of Groups 3 - 12 of the IUPAC periodic table of the elements, or any combination of such cations;

M''' represents a monoatomic cation of an element selected from Group 14 of the IUPAC periodic table of the elements, or of an element selected from any of Groups 13 and 15 of the IUPAC periodic table of the elements, or of Zn, or any combination of such cations; X represents an anion of an element selected from Group 17 of the IUPAC periodic table of the elements, or any combination of such anions, or wherein X is absent;

X' represents an anion of one or more elements selected from Group 16 of the IUPAC periodic table of the elements, or any combination of such anions, or wherein X' is absent; and

M'''' represents a dopant cation of an element selected from rare earth metals of the IUPAC periodic table of the elements, or from transition metals of the IUPAC periodic table of the elements, or of Ba, Sr, Tl, Pb, or Bi, or any combination of such cations, or wherein M'''' is absent;
with the proviso that at least one of X and X' is present.

A UV-sensitive yarn is also disclosed herein. The UV-sensitive yarn comprises a spun fiber as also disclosed herein.

Additionally, UV-sensitive fabric comprising the UV-sensitive yarn is disclosed herein.

A method for producing spun fiber comprising cellulose fiber doped with an optically active material is disclosed herein.

Finally, the use of a spun fiber according to the present disclosure or produced according to the method of present disclosure, a UV-sensitive yarn according to the present disclosure, or a UV-sensitive fabric according the present disclosure to produce UV-sensitive garments or clothing is disclosed.

**BRIEF DESCRIPTION OF THE DRAWINGS**

The accompanying drawing, which is included to provide a further understanding of the embodiments and constitute a part of this specification, illustrates various embodiments. In the drawings:

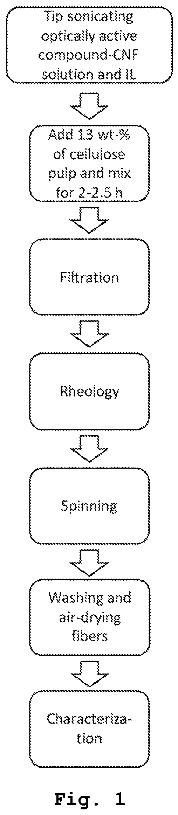

Fig. 1 presents a generalized flow of the process for producing UV-sensitive spun fibers according to the present disclosure.

Fig. 2 present the reflectance spectrum of UV-sensitive spun fibers according to the present disclosure.

Fig. 3 presents the particle size of the optically active compound before and after ball milling.

Fig. 4 presents the abrasion resistance of a UV-sensitive fabric according to the present disclosure.

Fig. 5 presents the effects of pilling on a UV-sensitive fabric according to the present disclosure.

Fig. 6 presents the results recorded with an ad-hoc color intensity measurement mobile application. The color intensity values are from the ratio of the digital 8-bit G channels' values of the white, unexposed reference sample and the sample exposed to different doses of 254 nm UV radiation.

**DETAILED DESCRIPTION**

A spun fiber comprising cellulose fiber doped with an optically active material is disclosed. The optically active material may be represented by the following formula (I)

$$(M')_8(M''M''')_6O_{24}(X,X')_2:M'''' \qquad \text{formula (I)}$$

wherein

M' represents a monoatomic cation of an alkali metal selected from Group 1 of the IUPAC periodic table of the elements;

M'' represents a trivalent monoatomic cation of an element selected from Group 13 of the IUPAC periodic table of the elements, or of a transition element selected from any of Groups 3 - 12 of the IUPAC periodic table of the elements, or any combination of such cations;

M'' represents a monoatomic cation of an element selected from Group 14 of the IUPAC periodic table of the elements, or of an element selected from any of Groups 13 and 15 of the IUPAC periodic table of the elements, or of Zn, or any combination of such cations; X represents an anion of an element selected from Group 17 of the IUPAC periodic table of the elements, or any combination of such anions, or wherein X is absent;

X' represents an anion of one or more elements selected from Group 16 of the IUPAC periodic table of the elements, or any combination of such anions, or wherein X' is absent; and

M'''' represents a dopant cation of an element selected from rare earth metals of the IUPAC periodic table of the elements, or from transition metals of the IUPAC periodic table of the elements, or of Ba, Sr, Tl, Pb, or Bi, or any combination of such cations, or wherein M'''' is absent;

with the proviso that at least one of X and X' is present.

A fiber according to the present disclosure may be produced by wet and dry wet spinning processes. This makes it possible to produce a textile fiber that contains a UV sensor that is stable and sufficiently active in the textile construction. Functionalization of the textile fiber is achieved by incorporating the UV sensor into the spinning solution. The UV sensor is fixed in the fiber matrix by coextrusion through spinnerets and subsequent coagulation/regeneration of the cellulose fibers in a non-solvent, water in the case of the present disclosure.

As used herein, the term "optically active compound" refers to a compound that interacts with light. In one embodiment, the optically active compound interacts with UV light.

In one embodiment, the cellulose fiber comprised in the spun fiber according to the present disclosure is a man-made cellulose textile fiber. In certain embodiments, the man-made cellulose textile fiber is a cellulose fiber produced using dry-wet jet spinning technology for MMCF production, which utilizes ionic liquids (ILs) to dissolve cellulose. In the process the polymer solution containing IL and cellulose is extruded through a spinneret and an air gap into water. In water cellulose regenerates and the regenerated fiber is drawn from the water around a rotating godet. In one embodiment, the man-made cellulose textile fiber may a fiber produced using the Ioncell process or the lyocell process.

The proviso that at least one of X and X' is present should in this specification, unless otherwise stated, be understood such that either X or X' is present, or such that both X and X' are present.

In this specification, unless otherwise stated, the expression "monoatomic ion" should be understood as an ion consisting of a single atom. If an ion contains more than one atom, even if these atoms are of the same element, it is to be understood as a polyatomic ion. Thus, in this specification, unless otherwise stated, the expression "monoatomic cation" should be understood as a cation consisting of a single atom.

Hackmanite, which is a variety of sodalite material, is natural mineral having the chemical formula of $Na_8Al_6Si_6O_{24}(Cl,S)_2$. It has previously bee shown that a synthetic hackmanite-based material showing a long emitting afterglow can be prepared. The synthetic material, as a result of being subjected to e.g. ultraviolet radiation or sunlight has the technical effect of showing a long white color afterglow. In one embodiment, the wavelength of the emission of the material according to one or more embodiments described in this specification is 370 - 730 nm. In one embodiment, the peak of emission of the material according to one or more embodiments described in this specification is at about 515 nm.

In this specification, unless otherwise stated, the expressions "afterglow", "persistent luminescence", "phosphorescence", or any corresponding expression should be understood as referring to the phenomenon encountered in materials which make them glow in the dark after having been excited with ultraviolet or visible light or with higher energy radiation.

The combination of at least two monoatomic cations of different alkali metals selected from Group 1 of the IUPAC periodic table of the elements has the effect of enabling the preparation of a material that is sensitive to ultraviolet A radiation, ultraviolet B radiation and/or ultraviolet C radiation. The combination has the effect of enabling the preparation of a material being able to indicate the presence of at least one of ultraviolet A radiation, ultraviolet B radiation and ultraviolet C radiation, or the presence of all of ultraviolet A radiation, ultraviolet B radiation and ultraviolet C radiation.

In one embodiment, the material is configured to change color on exposure to ultraviolet radiation, wherein the correlation between the intensity of the color of the material and the intensity of the ultraviolet radiation is calculated based on the following formula 1:

$$y = A1*e^{(x/t1)} + y0$$

$$formula\ 1$$

wherein the parameters have the following meanings:

y = color intensity [per cent of black]
A1 = amplitude for color
x = UV index value for sunlight or UV lamp power [%] for UVA, UVB, and/or UVC
t1 = growth constant for color
y0 = initial offset for color.

Based on the above formula 1, the radiation intensity can be calculated from the color intensity as follows:

$$x = t1*[ln(y - y0) - lnA1].$$

In one embodiment, for solar UVI detection, A1 = -1 to -15, t1 = -30 to -5, and y0 = 5 to 20.
In one embodiment, for UVA detection, A1 = - 1.5 to -0.1, t1 = -30 to -10, and y0 = 9.5 to 10.5.
In one embodiment, for UVB detection, A1 = - 3.0 to -1.8, t1 = -450 to -20, and y0 = 11 to 13.
In one embodiment, for UVC detection, A1 = - 3.0 to -1.8, t1 = -200 to -15, and y0 = 12 to 13.
The change in the combination of at least two monoatomic cations of different alkali metals selected from Group 1 of the IUPAC periodic table of the elements enables to prepare a material that can be adjusted to detect ultraviolet A radiation, ultraviolet B radiation and/or ultraviolet C radiation.

A spun fiber according to the present disclosure exhibits photochromic properties. In certain embodiments, a spun fiber according to the present disclosure is a photochromic UV sensor. A photochromic UV sensor is a compound, composition, or materials such as fibers, yarns, or fabrics that reacts to exposure to UV light and provides an indication that it has been exposed to UV-light. Depending on the properties of the photochromic material, the response may be cumulative or rapid. In a rapid response, the photochromic sensor must react rapidly to provide real time exposure data. In a cumulative response, the photochromic sensor may be used e.g. to monitor daily exposure to UV-light. Both rapid and cumulative-response photochromic sensors may have different sensitives varying from high sensitivity to low sensitivity. The sensitivity of the sensor in this context refers to the threshold at which the sensor indicates that an exposure has occurred. In certain embodiments, a spun fiber according to the present disclosure may be adapted to tune the sensitivity of the photochromic properties.

In one embodiment, M' represents a monoatomic cation of an alkali metal selected from Group 1 of the IUPAC periodic table of the elements, or any combination of such cations, with the proviso that M' does not represent the monoatomic cation of Na alone.

In one embodiment, M' represents a combination of at least two monoatomic cations of different alkali metals selected from Group 1 of the IUPAC periodic table of the elements.

In one embodiment, M' represents a combination of at least two monoatomic cations of different alkali metals selected from a group consisting of Li, Na, K, Rb, Cs, and Fr.

In one embodiment, M' represents a monoatomic cation of a metal selected from a group consisting of Li, K, Rb, Cs, Fr, or any combination of such cations.

In one embodiment, M' represents a combination of at least two monoatomic cations of different metals, wherein at least one metal is selected from Group 1 of the IUPAC periodic table of the elements.

In one embodiment, M" represents a trivalent monoatomic cation of a metal selected from a group consisting of Al and Ga, or a combination of such cations.

In one embodiment, M" represents a trivalent monoatomic cation of B.

In one embodiment, M''' represents a monoatomic cation of an element selected from a group consisting of Si and Ge, or a combination of such cations.

In one embodiment, M''' represents a monoatomic cation of an element selected from a group consisting of Al, Ga, N, P, and As, or any combination of such cations.

In one embodiment, X represents an anion of an element selected from a group consisting of F, Cl, Br, I, and At, or any combination of such anions.

In one embodiment, X' represents a monoatomic or a polyatomic anion of one or more elements selected from a group consisting of O, S, Se, and Te, or any combination of such anions.

In one embodiment, M'''' represents a cation of an element selected from a group consisting of Yb, Er, Tb, and Eu, or any combination of such cations.

In one embodiment, M''''' represents a cation of an element selected from a group consisting of Ti, V, Cr, Mn, Fe, Co, Ni, Cu, Ag, W, and Zn, or any combination of such cations.

In one embodiment, the optically active compound is selected from a group consisting of:

$(Li_xNa_{1-x-y-z}K_yRb_z)_8(Al,Ga)_6SisO_{24}(Cl,S)_2$:Ti,
$(Li_xNa_{1-x-y-z}K_yRb_z)_8(Al,Cr)_6Si_6O_{24}(Cl,S)_2$:Ti
$(Li_xNa_{1-x-y-z}K_yRb_z)_8(Al,Mn)_6Si_6O_{24}(Cl,S)_2$:Ti,
$(Li_xNa_{1-x-y-z}K_yRb_z)_8(Al,Fe)_6Si_6O_{24}(Cl,S)_2$:Ti,
$(Li_xNa_{1-x-y-z}K_yRb_z)_8(Al,Co)_6Si_6O_{24}(Cl,S)_2$:Ti,
$(Li_xNa_{1-x-y-z}K_yRb_z)_8(Al,Ni)_6Si_6O_{24}(Cl,S)_2$:Ti,
$(Li_xNa_{1-x-y-z}K_yRb_z)_8(Al,Cu)_6Si_6O_{24}(Cl,S)_2$:Ti,
$(Li_xNa_{1-x-y-z}K_yRb_z)_8(Al,B)_6Si_6O_{24}(Cl,S)_2$:Ti,
$(Li_xNa_{1-x-y-z}K_yRb_z)_8Mn_6Si_6O_{24}(Cl,S)_2$:Ti,
$(Li_xNa_{1-x-y-z}K_yRb_z)_8Cr_6Si_6O_{24}(Cl,S)_2$:Ti,
$(Li_xNa_{1-x-y-z}K_yRb_z)_8Fe_6Si_6O_{24}(Cl,S)_2$:Ti,
$(Li_xNa_{1-x-y-z}K_yRb_z)_8Co_6Si_6O_{24}(Cl,S)_2$:Ti,
$(Li_xNa_{1-x-y-z}K_yRb_z)_8Ni_6Si_6O2_4(Cl,S)_2$:Ti,
$(Li_xNa_{1-x-y-z}K_yRb_z)_8Cu_6Si_6O_{24}(Cl,S)_2$:Ti,
$(Li_xNa_{1-x-y-z}K_yRb_z)_8B_6Si_6O_{24}(Cl,S)_2$:Ti,
$(Li_xNa_{1-x-y-z}K_yRb_z)_8Ga_6Si_6O_{24}(Cl,S)_2$:Ti,
$(Li_xNa_{1-x-y-z}K_yRb_z)_8Al_6(Si,Zn)_6O_{24}(Cl,S)_2$:Ti,
$(Li_xNa_{1-x-y-z}K_yRb_z)_8Al_6(Si,Ge)_6O_{24}(Cl,S)_2$:Ti,
$(Li_xNa_{1-x-y-z}K_yRb_z)_8Al_6Zn_6O_{24}(Cl,S)_2$:Ti,
$(Li_xNa_{1-x-y-z}K_yRb_z)_8Al_{6G}e_{6O24}(Cl,S)_2$:Ti,
$(Li_xNa_{1-x-y-z}K_yRb_z)_8Al_6(Ga,Si,N)_6O_{24}(Cl,S)_2$:Ti,
$(Li_xNa_{1-x-y-z}K_yRb_z)_8Al_6(Ga,Si,As)_6O_{24}(Cl,S)_2$:Ti,
$(Li_xNa_{1-x-y-z}K_yRb_z)_9Al_6(Ga,N)_6O_{24}(Cl,S)_2$:Ti,
$(Li_xNa_{1-x-y-z}K_yRb_z)_8Al_6(Ga,As)_6O_{24}(Cl,S)_2$:Ti,
$(Li_xNa_{1-x-y-z}K_yRb_z)_8(Al,Ga)_6Ge_6O_{24}(Cl,S)_2$:Ti,

$(Li_xNa_{1-x-y-z}K_yRb_z)_8(Al,Cr)_6Ge_6O_{24}(Cl,S)_2$:Ti,
$(Li_xNa_{1-x-y-z}K_yRb_z)_8(Al,Mn)_6Ge_6O_{24}(Cl,S)_2$:Ti,
$(Li_xNa_{1-x-y-z}K_yRb_z)_8(Al,Fe)_6Ge_6O_{24}(Cl,S)_2$:Ti,
$(Li_xNa_{1-x-y-z}K_yRb_z)_8(Al,Co)_6Ge_6O_{24}(Cl,S)_2$:Ti,
$(Li_xNa_{1-x-y-z}K_yRb_z)_8(Al,Ni)_6Ge_6O_{24}(Cl,S)_2$:Ti,
$(Li_xNa_{1-x-y-z}K_yRb_z)_8(Al,Cu)_6Ge_6O_{24}(Cl,S)_2$:Ti,
$(Li_xNa_{1-x-y-z}K_yRb_z)_8(Al,B)_6Ge_6O_{24}(Cl,S)_2$:Ti,
$(Li_xNa_{1-x-y-z}K_yRb_z)_8Mn_6Ge_6O_{24}(Cl,S)_2$:Ti,
$(Li_xNa_{1-x-y-z}K_yRb_z)_8Cr_6Ge_6O_{24}(Cl,S)_2$:Ti,
$(Li_xNa_{1-x-y-z}K_yRb_z)_8Fe_6Ge_6O_{24}(Cl,S)_2$:Ti,
$(Li_xNa_{1-x-y-z}K_yRb_z)_8Co_6Ge_6O_{24}(Cl,S)_2$:Ti,
$(Li_xNa_{1-x-y-z}K_yRb_z)_8Ni_6Ge_6O_{24}(Cl,S)_2$:Ti,
$(Li_xNa_{1-x-y-z}K_yRb_z)_8Cu_6Ge_6O_{24}(Cl,S)_2$:Ti,
$(Li_xNa_{1-x-y-z}K_yRb_z)_8B_6Ge_6O_{24}(Cl,S)_2$:Ti, and
$(Li_xNa_{1-x-y-z}K_yRb_z)_8Ga_6Ge_6O_{24}(Cl,S)_2$:Ti,
wherein

$$x + y + z \leq 1,$$

and

$$x \geq 0, \quad y \geq 0, \quad z \geq 0.$$

In one embodiment, the material is selected from a group consisting of $(Na,K)_8Al_6Si_6O_{24}(Cl,S)_2$, $(Na,Rb)_8Al_6Si_6O_{24}(Cl,S)_2$, $(Na,K,Rb)_8Al_6Si_6O_{24}(Cl,S)_2$, $(Na,K)_8Al_6Si_6O_{24}(Cl,S)_2$:Eu, $(Na,K)_8Al_6Si_6O_{24}(Cl,S)_2$:Tb, $(Li,K)_8Al_6Si_6O_{24}(Cl,S)_2$, $(Li,Rb)_8Al_6Si_6O_{24}(Cl,S)_2$, $(Li,K,Rb)_8Al_6Si_6O_{24}(Cl,S)_2$, and $(Li, Na,K,Rb)_8Al_6Si_6O_{24}(Cl,S)_2$.

In one embodiment, the optically active compound is selected from a group consisting of $(Li,Na)_8(Al,Si)_6O_{24}(Cl,S)_2$:Ti, $(Na,K)_8(Al,Si)_6O_{24}(Cl,S)_2$:Ti, and $(Na,Rb)_8(Al,Si)_6O_{24}(Cl,S)_2$:Ti.

In one embodiment, the optically active compound is synthesized by a reaction according to Norrbo *et al.* (Norrbo, I.; Gluchowski, P.; Paturi, P.; Sinkkonen, J.; Lastusaari, M., Persistent Luminescence of Tenebrescent Na8Al6-Si6O24(Cl,S)2: Multifunctional Optical Markers. Inorg. Chem. 2015, 54, 7717-7724), which reference is based on Armstrong & Weller (Armstrong, J.A.; Weller, J.A. Structural Observation of Photochromism. Chem. Commun. 2006, 1094-1096) using stoichiometric amounts of Zeolite A and $Na_2SO_4$ as well as LiCl, NaCl, KCl and/or RbCl as the starting materials. The at least one dopant is added as an oxide, a bromide, a fluoride, a chloride, or an iodide. In one embodiment, the at least one dopant may be added as an oxide. In one embodiment, the dopant may be $TiO_2$. The material can be prepared as follows: Zeolite A is first dried at 500 °C for 1 h. The initial mixture is then heated at 850 °C in air for 48 h. The product is then freely cooled down to room temperature and ground. Finally, the product is re-heated at 850 °C for 2 h under a flowing 12 % $H_2$ + 88 % $N_2$ atmosphere. The as-prepared materials are washed with water to remove any excess LiCl/NaCl/KCl/RbCl impurities. The purity can be verified with an X-ray powder diffraction measurement.

In one embodiment, the spun fiber comprises the optically active material in an amount that is 0.1 weight-% to 20 weight-%. In one embodiment, the spun fiber comprise the optically active material in an amount that is 0.1 - 20 weight-%, or 1 - 18 weight-%, or 1 - 16 weight-%, or 1 - 14 weight-%, or 2 - 12 weight-%, or 2 - 10 weight-%.

In one embodiment, the optically active material included in the fiber is milled.

In one embodiment, the fiber has a birefringence of 0.04 - 0.06.

In one embodiment, the reflectance of the fiber is 10 - 100 %.

Due to the embedding of the inorganic material, the fiber loses mechanical properties. Since the man-made cellulose fibers have a very high inherent strength, the loss of strength can be tolerated, whereas this should no longer be the case for viscose fibers, for example.

In certain embodiments, spun fibers according to the present disclosure have a tenacity $\sigma \geq 32$ cN/tex and elongation $\varepsilon \geq 7\%$ when conditioned. In certain embodiments, spun fibers according to the present disclosure have a tenacity $\sigma \geq 32$ cN/tex and elongation $\varepsilon \geq 10\%$ when wet.

In one embodiment, the fiber is photochromic.

The cellulose fiber included in the fiber of the present disclosure may be Ioncell fiber produced as disclosed in e.g. WO 2018/142025 A1, WO 2018/138416 A1, and/or WO 2018/115584 A1.

A spun fiber as disclosed herein may be spun to yarn using any method known to a person skilled in the art.

A UV-sensitive yarn is disclosed herein. The UV-sensitive yarn comprises a spun fiber as also disclosed herein.

In certain embodiments, the UV-sensitive yarn comprising a spun fiber according to the present disclosure exhibits photochromic properties. In certain embodiments, a UV-sensitive yarn according to the present disclosure exhibits photochromic properties that may be used to indicate instant or prolonged exposure to UV radiation. In one embodiment, the reflectance of the UV-sensitive yarn is 10 - 100 %.

In certain embodiment, the UV-sensitive yarn disclosed herein may be used to produce UV-sensitive fabric. The yarn of the present disclosure may be used to produce fabric using any method known to a person skilled in the art. Despite the presence of the optically active compound, comparable to the mechanical properties of Tencel fibers and significantly higher as compared to yarn produced from cotton fibers

A UV-sensitive fabric comprising the UV-sensitive yarn is disclosed herein. In one embodiment, the UV-sensitive fabric has an abrasion resistance of at least 15 000 rubs against the standard wool fabric with a pressure of 9 kPa and determined by the Martindale method.

In certain embodiments, the UV-sensitive fabric comprising a spun fiber and/or UV-sensitive yarn according to the present disclosure exhibits photochromic properties. In certain embodiments, a UV-sensitive fabric according to the present disclosure exhibits photochromic properties that may be used to indicate instant or prolonged exposure to UV radiation.

In one embodiment, the UV-sensitive fabric has a pilling grade of at least 4 after 2000 rubs, a fuzzing grade of at least 4 after 2000 rubs, and a matting grade of at least 3.5 after 2000 rubs determined by the modified Martindale method where UV-sensitive fabric pieces are abraded against each other's. Grades are from 5 to 1 where grade 5 means no pills/fuzzing/matting and grade 1 means severe pills/fuzzing/matting.

In one embodiment, the UV-sensitive fabric maintains at least 50 % of its original reflectance after washing. In certain embodiments, the UV-sensitive fabric maintains at least 60 %, or at least 65 %, or at least 70 %, or at least 75 %, or at least 80 %, or at least 85 %, or at least 90 %, or at least 95 of its original reflectance after washing. In one embodiment, the UV-sensitive fabric maintains 100 % of its original reflectance after washing. The wash fastness test shows that the UV-sensitive material is fixed in the fiber/fabric matrix and is not removed with increasing washings, as would be the case if the material were only fixed on the surface by coating.

Additionally, a fabric according to the present disclosure exhibits an improved abrasion and washing durability of dyes.

A method for producing spun fiber comprising cellulose fiber doped with an optically active material is disclosed herein. The method may comprise:

- dispersing optically active compound in a nanofibrillated cellulose suspension,
- adding an ionic liquid to the dispersion,
- sonicating the dispersion,
- spinning a fiber from the dispersion,
- washing the fiber with water, and
- allowing the fiber to dry.

In certain embodiments, sonication or an equivalent process may be used to disperse the optically active compound.

In one embodiment, the optically active compound is milled for 1 - 30 minutes prior to dispersing in the ionic liquid. In one embodiment, the optically active compound is milled for 2 - 25 minutes, or 3 - 20 minutes, or 4 - 18 minutes, or 4 - 16 minutes, or 5 - 14 minutes, or 6 - 12 minutes prior to dispersing in the ionic liquid.

In certain embodiments, the optically active material is milled until the particles have a cross-sectional area of 0.2 - 10 $\mu m^2$. In certain embodiments, the optically active material is milled until the particles have a cross-sectional area of 0.2 - 10 $\mu m^2$, or 0.2 - 9 $\mu m^2$, or 0.3 - 8 $\mu m^2$, or 0.4 - 7 $\mu m^2$, or 0.4 - 6 $\mu m^2$, or 0.5 - 5 $\mu m^2$, 0.5 - 4 $\mu m^2$, or 0.5 - 3 $\mu m^2$, or 0.5 - 2 $\mu m^2$, or 0.5 - 1.8 $\mu m^2$, or 0.6 - 1.6 $\mu m^2$, or 0.7 - 1.5 $\mu m^2$. Close control of the particle size of the optically active compound is important to avoid that the inorganic particles are filtered out during the filtration of the spinning solution and are thus lost. Control of the particle size is also important to achieve a homogeneous distribution of the particles in the cellulose solution, which is stable and does not gel. In addition, the rheological properties of the optically active compound dispersion should not change.

In one embodiment, the particle size of the optically active compound may be critical to prevent gelling of the suspension.

In certain embodiments, the particles of optically active compound have a cross-sectional area of 0.2 $\mu m^2$ or less, in this case no milling is needed. In certain embodiments, particles of optically active compound with a cross-sectional area of 0.2 $\mu m^2$ or more are milled prior to use.

Cellulose nanofibrils (CNF) were prepared by fluidizing never-dried pulp. The pulp was disintegrated by passing through a high-pressure fluidizer for six times. No chemical or enzymatic pretreatment was used prior to disintegration. In certain embodiments, the CNF has a width of 5-20 nm and the length is from hundreds of nanometers to several micrometers.

In certain embodiments, additives may be added to the suspensions comprising CNF and/or optically active compound to prevent gelling.

To obtain this homogeneous mixture of IL and particles of the optically active compound, the suspension must be mixed by an appropriate energy input. In one embodiment, the suspension may be finely dispersed by tip sonication. In one embodiment, a specific energy input of 30 MJ/m$^3$ solution may be used. In certain embodiments, sonication or an equivalent process may be used to disperse the optically active compound.

In certain embodiments, nanocellulose is added to the suspension of optically active compound in IL before the addition of cellulose pulp.

In certain embodiments, the IL is selected from the group consisting of ionic liquids such as [DBNH][OAc], [DBUH][OAc], [mTBDH] [OAc], [Emim] [OAc], [Bmim][OAc], [TMG] [OAc], [DMP] [OAc], NMMo monohydrate, and other ionic liquids that dissolve cellulose at a concentration of at least 13 weight-% (such as imidazolium-based ILs). In one embodiment, the IL is selected from the group consisting of [DNBH][OAc]. In one embodiment, the optically active material is dispersed in the IL at a concentration of 1 - 10 weight-%. In one embodiment, the optically active material is dispersed in the IL at a concentration of 1 - 9 weight-%, or 1 - 8 weight-%, or 1 - 7 weight-%, or 1.5 - 6 weight-%, or 1.5 - 5 weight-%, or 2 - 4 weight-%.

In one embodiment, the fiber is a wet spinning process or a dry wet spinning process. In certain embodiments, the wet spinning process is a standard viscose (CV) process or a Modal process (CMD). In certain embodiments, the dry wet spinning process is the Lyocell process (CLY). In certain embodiments, the lyocell process includes using NMMO monohydrate as solvent and/or using an ionic liquid as direct cellulose solvent.

In one embodiment, the fiber comprising cellulose fiber doped with an optically active material is spun using a dry-jet spinning unit.

The use of a spun fiber according to the present disclosure or produced according to the method of present disclosure, a UV-sensitive yarn according to the present disclosure, or a UV-sensitive fabric according the present disclosure to produce UV-sensitive garments or clothing is disclosed herein. In certain embodiments, the UV-sensitive garments or clothing exhibits a photochromic effect. In certain embodiments, the photochromic effect may indicate exposure to UV-light.

In one embodiment, the UV-sensitive garments or clothing are children's garments or clothing.

The fiber comprising cellulose fiber doped with an optically active material composition described in the current specification has the added utility of being UV-sensitive. This property makes the fiber highly suitable for the production of yarn that can be used in the production of UV-sensitive fabric. The UV-sensitive fabric may be used in clothing that indicates when a threshold of UV-exposure has been passed and can thus protect the person wearing the clothing from sunburn by indicating that a pre-determined threshold for UV exposure has be reached.

The fiber comprising cellulose fiber doped with an optically active material composition described in the current specification also has the added utility of improved fiber strength properties under conditioned and wet conditions.

The fiber comprising cellulose fiber doped with an optically active material composition described in the current specification has the added utility of absorbing UV-light. This property makes the fiber highly suitable for the production of yarn that can be used in the production of UV-sensitive fabric. The UV-sensitive fabric may be used in clothing that absorbs UV-light and thus protects the person wearing the clothing from sunburn.

The present invention further relates to an ultraviolet radiation sensing material, wherein the material comprises an optically active compound according to one or more embodiments described in this specification. The present invention further relates to an ultraviolet radiation sensing material, wherein the ultraviolet radiation sensing material comprises the material according to one or more embodiments described in this specification.

The present invention further relates to a device, wherein the device comprises a material according to one or more embodiments described in this specification. In one embodiment, the device is an ultraviolet radiation sensor, an ultraviolet radiation detector, mobile phone and app, or an ultraviolet radiation indicator.

The material can also be mixed as a powder in the raw materials used for the production of a plastic bottle, a sticker, a glass, a cellulose fiber, a cellulose yarn, a cellulose fabric and a similar product that is to be provided with a UV indicator or embedded with UV indicator. This offers the products to operate themselves a UV indicator. The products containing the material may also be conceived as jewelry, wearables, garment, fabric, textile or similar. The material can be used as a display portion of a meter, which is calibrated according to the shade.

The present invention further relates to the use of the material according to the present invention for indicating the presence of ultraviolet radiation. In one embodiment, the ultraviolet radiation is ultraviolet A radiation, ultraviolet B radiation and/or ultraviolet C radiation.

The present invention further relates to the use of the material according to the present invention in a security or authenticity device. In one embodiment, the security or authenticity device is selected from a group consisting of a thread, a fiber, a yarn, a fabric, a garment, a textile, a foil, a pigment, a dye and a hologram. In one embodiment the security or authenticity device is an ink or a pigment or a dye.

The present invention further relates to a method for determining the intensity of ultraviolet radiation, wherein the method comprises:

a) providing a material according to one or more embodiments described in this specification;
b) subjecting the material provided in step a) to ultraviolet radiation;
c) determining a change in the color of the material as result of being subjected to ultraviolet radiation; and
d) comparing the color of the material with a reference indicating the correlation of the intensity of the ultraviolet radiation with the color of the material.

In one embodiment, step c) comprises visually determining the change in the color of the material.

The reference may be e.g. a card or the like that indicates the correlation between the intensity of the ultraviolet radiation and the intensity of the color of the material. In one embodiment, the intensity of the color of the material is used to indicate the value of the UV index. In one embodiment, the correlation between the intensity of the color of the material and the intensity of the ultraviolet radiation is calculated based on the following formula 1:

$$y = A1 * e^{(x/t1)} + y0$$

$$formula\ 1$$

wherein the parameters have the following meanings:

y = color intensity [per cent of black]
A1 = amplitude for color
x = UV index value for sunlight or UV lamp power [%] for UVA, UVB, and/or UVC
t1 = growth constant for color
y0 = initial offset for color.

The embodiments of the invention described hereinbefore may be used in any combination with each other. Several of the embodiments may be combined together to form a further embodiment of the invention. A material, a device, a use, or a method, to which the invention is related, may comprise at least one of the embodiments of the invention described hereinbefore.

The material has the added utility of being a low-cost material offering stability even in high UV levels as well as decoloration with white light.

The material has the added utility that it does not change color in the absence of UV radiation.

The material has the added utility that its color can be returned to colorless (white), i.e. decolored, with visible light or heating thus enabling it to be reused.

The material has the added utility that it follows well the erythemal action spectrum making it possible to monitor especially UVB and UVC that cause sunburn.

The material has the added utility that with sunlight the color intensity can be used to indicate the value of the UV index.

## EXAMPLES

Reference will now be made in detail to various embodiments.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

Materials

**Pulp.** Birch prehydrolyzed kraft (PHK) dissolving pulp ($\eta$ = 446 mL/g Mn = 50.3 kDa, Mw = 156.4 kDa, PDI = 3.1). Received as sheets from Stora Enso (Finland). The sheets were ground into pulp using a Wiley mill. Dry matter content was determined.

**DBN.** 1,5-Diazabicyclo[4.3.0]non-5-ene (DBN, 99 %, Fluorochem, UK).

**OAc.** Acetic acid (glacial, 100%, Merck, Germany) .

**[DBNH] [OAc].** DBN was neutralized with an equimolar amount of OAc. Throughout neutralization the reaction mixture was heated (70 °C) to avoid IL crystallization. After correct amount of acid was added to base the solution was stirred for 30 minutes to ensure a complete conversion to [DBNH] [OAc].

**Optically active material.** ($Na_8Al_6Si_6O_{24}(Cl,S)_2$). Supplied by University of Turku (Finland). Batch #1 was non-milled optically active material and batches #2 and 3 were ball-milled 10 minutes with speed 10.

**CNF.** Cellulose nanofibrils (CNF) were prepared by fluidizing never-dried pulp. The pulp was disintegrated by passing through a high-pressure fluidizer for six times. No chemical or enzymatic pretreatment was used prior to disintegration. The CNF has a width of 5-20 nm and the length is from hundreds of nanometers to several micrometers.

Example 1 - Dispersing optically active material in IL

**Tip sonication.** To prepare for tip sonication a solution with 0,4 wt% CNF and 5 wt% optically active compound in water was prepared and mixed over night with a magnetic stirrer.

CNF-Optically active compound suspension was added to IL and sample was tip sonicated with Digital Sonifier (Branson) 3 x 30 seconds with 30% amplitude.

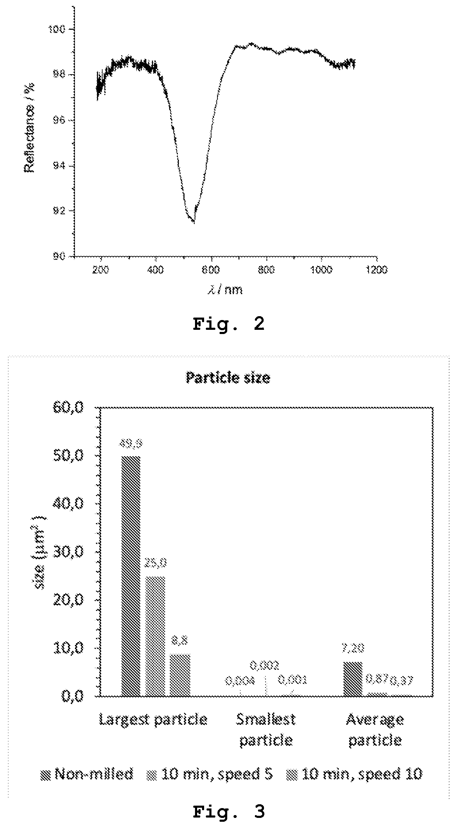

**Ball-milling.** Optically active compound powder was ball-milled using Philips Minimill PW4018/00 for 10 minutes at speed 5 and 10. The size of the particles before and after milling is presented in Fig. 3.

Example 2 - Cellulose fiber spinning with small spinning unit

**Dope preparation.** Optically active compound-CNF (0,4 wt%) suspension in water was prepared and mixed for at least 1 hour. Optically active compound-CNF suspension was added into melted [DNBH] [OAc] and tip sonicated using Digital Sonifier® (Branson) for 2 x 30 seconds, 30% amplitude. IL with dispersed optically active compound was poured into a small vertical kneader. 13 wt% cellulose was added and dissolved by mixing at 80°C, 30 rpm for 2-2,5 hours under a vacuum of around 20 mbar.

Subsequently, the dope was press-filtered to remove undissolved cellulose. Filtration was done through a layered filter mesh (GKD Ymax2, 5 μm nominal, Gebr. Kufferath AG, Germany) at 80°C. Filtrated sample was stored and solidified in 5°C.

**Rheology.** Rheological characteristics of dope were determined using Anton Paar MCR302 rheometer with parallel plate geometry (25 mm plate diameter, 1 mm gap size). The dynamic frequency sweep was performed with a strain of 0,5% and with the angular velocity range of 0,01-100 1/s at 55-90°C. Zero shear viscosity, storage modulus and angular frequency were recorded.

**Spinning.** Spinning was done using KS15 dry-jet wet spinning unit (Fourné Maschinenbau GmbH). A single filament spinneret with hole length of 20 μm and diameter of 100 μm was used. The dope was first melted at 80°C for approximately 1 hour after which heating was lowered to spinning temperature of around 70°C. The dope (20 g) was spun through an air gap into 5°C water bath where the cellulose regenerated. The formed filament was then guided onto a motor-driven godet couple around which the filament was collected. The extrusion velocity was kept constant but take-up velocity was varied to collect fibers with different DRs. Collected filament was cut into 10 cm fibers with a razor blade and washed with 80°C water for 2 hours, exchanging the water several times. Fibers were air-dried.

Example 3 - Cellulose fiber spinning with large spinning unit

**Dope preparation.** Optically active compound (21,5 wt%) - CNF (0,4 wt%) suspension in water was prepared and mixed for 1 hour. Optically active compound-CNF suspension was added into a 1 L glass bottle with around 1000 g of melted [DNBH][OAc] and tip sonicated using Digital Sonifier® (Branson) for 3 x 50 seconds, 50% amplitude. IL with dispersed optically active compound and rest of IL were added into a large vertical kneader and mixed for 10 minutes, 30 rmp, 80°C. 13 wt% cellulose was added and dissolved by mixing at 80°C, 30 rpm for 2 hours under reduced pressure.

Subsequently, the dope was press-filtered through a layered filter mesh (GKD Ymax2, 5 μm nominal, Gebr. Kufferath AG, Germany) at 80°C. Filtrated sample was stored and solidified in 5°C.

**Rheology.** See section Example 2.

**Spinning.** Dopes were spun using KS80 dry-jet wet spinning unit (Fourné Maschinenbau GmbH). A 400-hole spinneret with hole length of 20 μm and diameter of 100 μm was used. The dope was first melted at 80°C after which heating was lowered to spinning temperature of around 70°C. The dope (1,6 kg) was spun through an air gap into a 10°C water bath where the cellulose regenerated. The formed filaments were guided onto a motor-driven godet couple around which the filaments were collected. The extrusion velocity was kept constant but take-up velocity was varied to collect fibers with different DRs. Collected filament were cut into 10 cm fibers for testing and 4 cm fibers for yarn spinning. Fibers were washed using an in-house built fiber washing machine with 80°C water for 2 hours. Fibers were air-dried.

Example 4 - Yarn production

**Spin finish.** Dried fibers were treated with 0,25% 80:20 Afilan® CVS:Leomin® PN to improve fiber cohesion and reduce friction and static properties. Dry matter content of fibers was determined. Afilan® CVS and Leomin® PN were mixed in 50°C water. Fibers were added and mixed for 5 minutes. Excess water was removed by pressing to reach 300% pick-up and fibers were air-dried overnight. The target amount of spin finish was 0.25% from the mass of dry fibres.

**Opening fibers.** Fibers with optically active compound were opened by hand to avoid breaking fibers.

**Pre-yarn.** Opened fibres were divided into equal batches (around 25 g) and carded (Mesdan Lab carding machine 337A) to create a continuous web of fibres. Carded webs were folded into slivers which were drafted twice (Mesdan Stiro Roving Lab 3371). For the second drafting two slivers were combined (doubled). After the drafting the sliver was doubled again and formed into rovings. Roving tex was determined (Pure Ioncell = 881 tex; fibre comprising optically active compound = 862 tex) and the calculated roving yield (Pure Ioncell = 98,5%; fiber comprising optically active compound = 98,5%).

**Yarn spinning.** The roving was ring-spun (Sermates Ring Lab 82 BA) and the total draft in the spinning was adjusted to produce 30 tex yarn. Twist / m of 600 and Z torsion were used. The spinning speeds were 10 000 - 12 000 rpm.

**Fabric production.** Two ring-spun yarns were plied and twisted together (Agteks DirecTwist) to form 30 tex x 2 S 300 yarn. The plied yarn was knitted into a jersey fabric structure (Stoll CMS ADF 32W E7.3 multi gauge) for the fabric testing. The intarsia structure fabrics from both Ioncell and UV-sensitive yarns were knitted for showpieces.

Example 5 - Experimental methods

**Particle size of optically active compound.** Particle size was determined by TEM measurement using a JEM-1400 Plus apparatus before & after ball-milling.

**Mechanical properties of cellulose fibers.** Filament testing was performed on DR5, 8 and 11, or if 11 was not reached the highest DR reached, for each spin. Linear density, tenacity and elongation were measured using Favigraph 41442 (Textechno Herbert Stein GmbH & Co.KG) and a pretension weight of 100-200 mg. 20 fibers for each sample were tested with gauge length of 20 mm and 20 mm/min speed according to ISO 5079 standard. Tenacity and elongation were measured under both conditioned (20±2°C and 65±2%) and wet conditions.

Young's modulus was calculated from the stress-strain curve produced during tenacity measurements using MATLAB. The value was calculated from all DR8 and highest DR samples.

**Mechanical properties of yarn.** MTS400 (MTS System Norden) tensile tester with 50 N load, 250 mm/min testing speed and 250 mm gauge length was used for tensile measurements.

**Birefringence.** Birefringence is an optical property of fibers which describes fiber orientation. Birefringence was calculated from three filaments with average linear density (three measurements taken from each fiber) from all DR8 and highest DR samples. Filaments were fixed on a microscope glass between two pieces of double-sided tape. Measurements were done using a Zeiss Axio Scope A1 microscope with a Leica B 5 $\lambda$-Berek tilting compensator. Three spots from each fiber were measured. Birefringence was determined by dividing retardation by fiber diameter (calculated from linear density using cellulose density value of 1,5g/cm$^3$) and 0,062 which is assumed to be equivalent to 100% orientation (Lenz, Schurz and Wrentschur, 1994).

**X-ray Diffraction (XRD).** XRD samples were prepared by cutting fibers into tiny pieces using scissors and then pressing 100 mg of cut fibers into disks using a pellet press instrument with a constant force for 30 seconds. XRD measurements were conducted with CuK $\alpha$ X-ray instrument SmartLab (RIGAKU) operated at 45 kV and 200 mM. Scherrer equation was used to estimate crystal widths:

$$CW_{hkl} = \frac{K\lambda}{\beta_{hkl} \cos\theta}$$

**SEM.** SEM images of optically active compound powder, film surface and both fiber surface and cross-section were taken. To prepare cross-section samples a fiber bundle stretched in water was frozen in liquid nitrogen and fractured by breaking the ice. Both surface and cross section samples were fixed on sample holders using carbon tape and sputter coated with gold/palladium (80 Au/20 Pd) for 90 seconds with Q 150R S plus (Quorum) sputter. Sigma VP (Zeiss) scanning electron microscope was used to image samples.

**Reflectance measurements.** Reflectance measurements were conducted at University of Turku. Something about normalization and imaging films after UV irradiation.

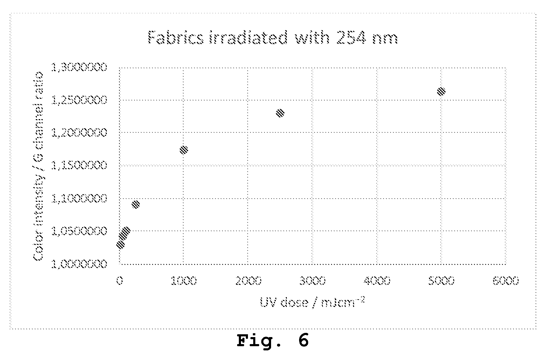

Reflectance measurements were conducted using a sample exposed to 254 nm UV radiation when using a non-UV-exposed sample as the white reference in an optically identical measurement setting for both samples. In a normal measurement, the sample is exposed to UVC exposure values of 10 - 5 000 mJ/cm$^2$. The indicated reflectance values are the resulting global minimum in the 350-800 nm part of the electromagnetic spectrum. The results of the reflectance measurements are presented in Fig. 6.

**Brightness.** Brightness of fibers was measured using SE 070R Elrepho (Lorentzen & Wettre) spectrophotometer. Light source D65 and observation angle of 10° were used.

**Fabric washings test.** Washing test was done according to EN ISO 105-C06. Colour fastness was determined by reflectance measurement.

**Fabric abrasion resistance.** Determination of fabric abrasion resistance (specimen breakdown) was done following the Martindale methods EN ISO 12947-2:2016.

**Fabric pilling.** Determination of fabric propensity to surface pilling, fuzzing and matting by visual analysis was done according to EN ISO 12945-4:2020. However, fabric was not conditioned before testing.

Example 6 - Mechanical properties of fibers

Fibre tensile testing was performed from DR5, 8 and 11, or if 11 was not reached the highest reached DR fibres. Linear density, tenacity and elongation at break were measured using Favigraph (Textechno Herbert Stein GmbH & Co.KG). A pretension weight of 100-200 mg depending on the linear density of fibre was used. Totally 20 fibres for each sample were tested with gauge length of 20 mm and 20 mm/min testing speed according to ISO 5079 standard. Tenacity and elongation were measured under both in a conditioned (20±2°C and 65±2%) and a wet condition (10 seconds wetting prior to the testing and testing in the water vessel).

Both conditioned and wet tenacities vary between two optically active compound fiber batches: second batch average tenacities are 11%-24% lower **(Table 2).** Elongation values also vary between batches so that DOPE I shows higher elongation values, except for at DR11 where elongation values are very close to each other. DOPE I fiber mechanical properties are similar to those received with the small spinning unit, whereas dope II values are close to 10% optically active compound fibers from the small spinning.

Some factors that might contribute to the differences between fibers from different dopes are differences in viscoelastic properties and breaking of fibers and aggregate formation during spinning processes affecting spinning conditions. Differences in viscoelastic properties could arise from dope preparation. For instance, DOPE I was sonicated for a longer time and DOPE II was filtered through the same filter as DOPE I which was already partly clogged.

**Table 2: Mechanical properties of fibers spun with large spinning unit.**

| Sample | DR | Conditioned | | | Wet | | |
| | | Linear density (dtex) | Tenacity (cN/tex) | Elongation (%) | Linear density (dtex) | Tenacity (cN/tex) | Elongation (%) |
|---|---|---|---|---|---|---|---|
| Enocell 4 | 5 | 2,36 ±0,20 | 49,63 ±2,61 | 14,34 ±1,20 | 2,36 ±0,19 | 42,37 ±4,42 | 15,9 ±1,9 |
| | 8 | 1,27 ±0,11 | 51,18 ±4,44 | 13,37 ±2,31 | 1,24 ±0,09 | 46,41 ±3,99 | 15,26 ±1,66 |
| | 11 | 1,30 | 50,48 | 14,4 | 1,28 | 45,71 | 15,55 |

| Sample | DR | | | | | | |
|---|---|---|---|---|---|---|---|
| | | ±0,14 | ±3,53 | ±1,62 | ±0,12 | ±4,23 | ±1,55 |
| 3,5% Optically active DOPE I | 5 | 2,82 ±0,24 | 33,45 ±2,07 | 8,50 ±0,74 | 2,68 ±0,23 | 33,1 ±1,97 | 12,33 ±0,78 |
| | 8 | 1,84 ±0,32 | 36,31 ±2,37 | 8,53 ±0,71 | 1,86 ±0,19 | 34,82 ±1,99 | 11,49 ±0,90 |
| | 11 | 1,31 ±0,12 | 37,9 ±2,71 | 8,12 ±0,83 | 1,33 ±0,10 | 37,15 ±2,18 | 11,35 ±0,98 |
| 3,5% Optically active DOPE II | 5 | 2,85 ±0,79 | 26,01 ±4,36 | 7,53 ±1,07 | 2,64 ±0,65 | 25,13 ±4,70 | 10,44 ±1,16 |
| | 8 | 1,82 ±0,37 | 29,28 ±4,09 | 7,04 ±1,02 | 1,79 ±0,29 | 27,83 ±4,41 | 9,94 ±1,28 |
| | 11 | 1,3 ±0,12 | 33,61 ±2,27 | 8,90 ±0,74 | 1,32 ±0,08 | 32,82 ±3,00 | 11,41 ±1,31 |
| Tencel | | 1,27 ±0,22 | 36,8 ±2,7 | 15,6 ±0,2 | 1,27 ±0,22 | 33,0 ±3,6 | 18,5 ±3,7 |

Example 7 - Optical properties

**Birefringence.** 3,5% Optically active compound fibers spun with the small spinning unit showed higher orientation than pure Ioncell fibers, but here all samples are less oriented than samples spun with the small spinning unit and optically active compound fiber orientation is much lower than Ioncell fiber orientation **(Table 3)** .

**Table 3: Birefringence and total orientation of fibers.**

| Sample | DR | Δn | total orientation |
|---|---|---|---|
| Enocell 4 | 11 | 0,0455 ±0,0029 | 0,733 ±0,046 |
| 3,5% Optically active compound dope 1 | 11 | 0, 0438 ±0,0039 | 0, 705 ±0,063 |
| 3,5% Optically active compound dope 2 | 11 | 0, 0444 ±0,0028 | 0,715 ±0,045 |

**XRD.** Differences in crystal widths between samples were very small, at the maximum around 2 nm. Crystallinity index of DOPE I fibers were close to pure Ioncell fibers (34,3% and 35,6& respectively), whereas the CRI of DOPE II fibers were higher (38,7%). This is quite curious since the viscoelastic properties of DOPE I where closer to the pure cellulose dope than DOPE II. Crystal formed by optically active compound of 45-48 nm were measured in the fibers.

Example 8 - Optically active yarn

Although 3,5% Optically active yarn breaking tenacity was significantly lower than pure Ioncell yarn, it was shown to exhibit a similar breaking tenacity to Tencel, indicating good yarn quality **(Table 4).** Additionally, it is worth noticing that optically active compound fiber quality is very even which also contributed to easy yarn spinning. It is also possible that the unevenness of optically active compound fibers increased friction between fibers and thus improved spinnability.

Optically active compound yarn contains some thick fibers that were not removed during processing as fibers were opened by hand. This likely has no or a very small impact on yarn quality.

**Table 4: Yarn mechanical properties.**

| | Conditioned | | | |
|---|---|---|---|---|
| Yarn sample | Linear density (tex, g/1000 m) | Breaking force (cN) | Elongation (%) | Tenacity (cN/tex) |
| Ioncell | 29,7 ±0,8 | 986 ±76 | 8,4 ±0,5 | 33,2 ±2,6 |

(continued)

| | Conditioned | | | |
|---|---|---|---|---|
| 3, 5% Optically | 29,4 ±1, 9 | 683 ±69 | 6,1 ±0,4 | 23,2 ±2,3 |
| active compound<br>Ref. Tencel<br>Ref. Cotton | 32,1 ±1,3<br>21,1 ±0,5 | 763 ±89<br>- | 9,2 ±0,9<br>5,9 ±0,3 | 23,8 ±2,8<br>14,4 ±1,2 |

Optically active yarn has a slightly yellowish colour, whereas pure Ioncell yarn is shiny white.

Example 9 - Fabric testing

Fabric mass per square area was a bit higher for Optically active fabric ($224 \pm 12,5$ g/m$^2$) than for pure Ioncell fabric ($216 \pm 10,4$ g/m$^2$).

**Reflectance.** UV irradiation was shown to lead to a visible optical response in the fabric. Furthermore, optically active compound mobile application could be used to determine UV index from the exposed fabric. The inconsistency of the results from the app are due to early stage of application. Any shadows, changes in lighting conditions, formations on the fabric, camera angle ect. Impact the result. However, a clear trend of increasing UV index with increased radiation can be read with the app.

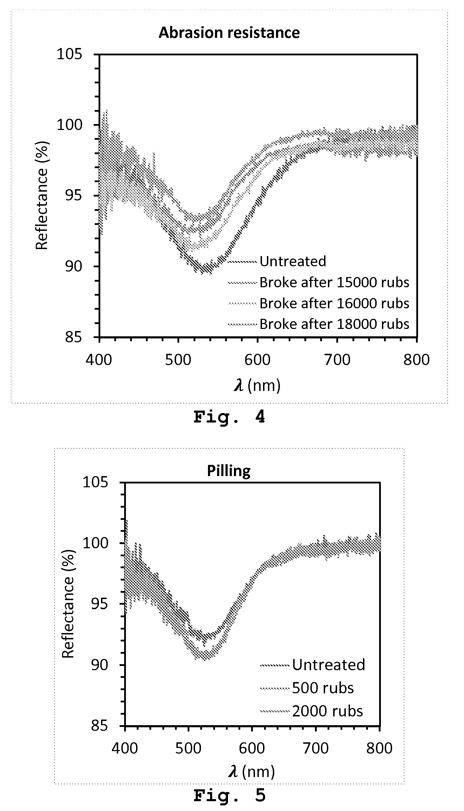

**Abrasion resistance.** Optically active fabrics broke after 15 000 - 18 000 rubs, whereas pure Ioncell fabric broke only after 34 000 - 35 000 rubs, which was expected as fiber tenacities contribute to fabric strength. optically active compound fabric reflectance was measured at breaking point, which showed that fabric deterioration decreased optical response of the fabric **(Figure 4).**

**Pilling test.** Both Ioncell fabric and optically active compound fabric showed slight pilling and fuzzing after 2000 rubs (Table 5). Reflectance of fabric was not decreased, but rather seemed to increase after pilling test (Figure 5). This is likely due just to normal standard deviation since reflectance is measured from just one spot instead of taking an average from several spots. However, it might also be the case that wearing out of cellulose from the surface would reveal optically active compound and increase colourability. However, this hypothesis would need more testing.

**Table 5: Pilling test results. Samples were graded by eye, where 5 = no change and 1 = severe change.**

| Test results | | Ioncell fabric | | | Optically active fabric | | |
|---|---|---|---|---|---|---|---|
| | | Grade pilling | Grade fuzzing | Grade matting | Grade pilling | Grade fuzzing | Grade matting |
| After 125 rubs | 1 | 5 | 5 | 5 | 5 | 5 | 5 |
| | 2 | 5 | 5 | 5 | 5 | 5 | 5 |
| After 500 rubs | 1 | 4,5 | 4 | 5 | 5 | 4 | 5 |
| | 2 | 4,5 | 4 | 5 | 5 | 4 | 5 |
| After 1000 rubs | 1 | 4,5 | 4 | 5 | 4,5 | 4 | 5 |
| After 2000 rubs | 1 | 4 | 4 | 5 | 4 | 3,5 | 5 |

Washing fastness. After one washing cycle fabric colouration had not changed. And standard fabric showed no colouration under UV indicating that optically active compound was not removed during washing. Increased washing cycles would be interesting to test.

It is obvious to a person skilled in the art that with the advancement of technology, the basic idea may be implemented in various ways. The embodiments are thus not limited to the examples described above; instead they may vary within the scope of the claims.

The embodiments described hereinbefore may be used in any combination with each other. Several of the embodiments may be combined together to form a further embodiment. A method, a spun fiber, a yarn, a fabric, or a use, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

**Claims**

1. Spun fiber comprising cellulose fiber doped with and optically active material represented by the following formula (I)

$$(M')_8(M''M''')_6O_{24}(X,X')_2:M''''$$ formula (I)

wherein

M' represents a monoatomic cation of an alkali metal selected from Group 1 of the IUPAC periodic table of the elements;
M'' represents a trivalent monoatomic cation of an element selected from Group 13 of the IUPAC periodic table of the elements, or of a transition element selected from any of Groups 3 - 12 of the IUPAC periodic table of the elements, or any combination of such cations;
M''' represents a monoatomic cation of an element selected from Group 14 of the IUPAC periodic table of the elements, or of an element selected from any of Groups 13 and 15 of the IUPAC periodic table of the elements, or of Zn, or any combination of such cations;
X represents an anion of an element selected from Group 17 of the IUPAC periodic table of the elements, or any combination of such anions, or wherein X is absent;
X' represents an anion of one or more elements selected from Group 16 of the IUPAC periodic table of the elements, or any combination of such anions, or wherein X' is absent; and
M'''' represents a dopant cation of an element selected from rare earth metals of the IUPAC periodic table of the elements, or from transition metals of the IUPAC periodic table of the elements, or of Ba, Sr, Tl, Pb, or Bi, or any combination of such cations, or wherein M'''' is absent;
with the proviso that at least one of X and X' is present.

2. The spun fiber of claim 1, wherein M' represents a monoatomic cation of an alkali metal selected from Group 1 of the IUPAC periodic table of the elements, or any combination of such cations, with the proviso that M' does not represent the monoatomic cation of Na alone.

3. The spun fiber of claim 1, wherein M' represents a combination of at least two monoatomic cations of different alkali metals selected from Group 1 of the IUPAC periodic table of the elements.

4. The spun fiber of claim 1, wherein M' represents a combination of at least two monoatomic cations of different alkali metals selected from a group consisting of Li, Na, K, Rb, Cs, and Fr.

5. The spun fiber of claim 1, wherein M' represents a monoatomic cation of a metal selected from a group consisting of Li, K, Rb, Cs, Fr, or any combination of such cations.

6. The spun fiber of claim 1, wherein M' represents a combination of at least two monoatomic cations of different metals, wherein at least one metal is selected from Group 1 of the IUPAC periodic table of the elements.

7. The spun fiber of any of the preceding claims, wherein the fiber comprises the optically active material in an amount that is 0.1 weight-% to 20 weight-%.

8. The spun fiber of any of the preceding claims, wherein the optically active material is milled.

9. The spun fiber of any of the preceding claims, wherein the fiber has a birefringence of 0.04 - 0.06, as measured by the method in the description.

10. The spun fiber of any of the preceding claims, wherein the reflectance of the fiber is 75 - 100 %, as measured by the method in the description.

11. The spun fiber of any of the preceding claims, wherein the fiber is photochromic.

12. A UV-sensitive yarn comprising the spun fiber of any of the preceding claims.

13. The UV-sensitive yarn of claim 12, wherein the has a reflectance of 10 - 100 %, as measured by the method in the description.

**14.** A UV-sensitive fabric comprising the yarn of any of claims 12 - 13, wherein the fabric has an abrasion resistance of at least 15 000 rubs, as measured by the method in the description.

**15.** The UV-sensitive fabric of claim 14, wherein the fabric has a pilling grade of at least 4 after 2000 rubs, a fuzzing grade of at least 4 after 2000 rubs, and a matting grade of at least 3.5 after 2000 rubs, as measured by the method in the description.

**16.** The UV-sensitive fabric of any of claims 14-15, wherein the fabric maintains at least 95 % of its original reflectance after washing, as measured by the method in the description.

**17.** Method for producing the spun fiber of any one of claims 1 - 11, wherein the method comprises:

- dispersing optically active compound in a nanofibrillated cellulose suspension,
- adding an ionic liquid to the dispersion,
- sonicating the dispersion,
- spinning a fiber from the dispersion,
- washing the fiber with water, and
- allowing the fiber to dry.

**18.** The method of claim 17, wherein the optically active compound is milled for 1 - 30 minutes prior to dispersing in the IL.

**19.** The method of any of claims 17 - 18, wherein the IL is selected from the group consisting of ionic liquids such as [DBNH] [OAc], [DBUH][OAc], [mTBDH] [OAc], and other ionic liquids that dissolve cellulose (such as imidazolium-based ILs).

**20.** The method of any of claims 17 - 19, wherein the fiber is spun using a wet spinning process or a dry wet spinning process.

**21.** Use of a spun fiber according to any one of claims 1 - 11 or produced according to the method of any one of claims 17-20, a UV-sensitive yarn according to any one of claims 12-13, or a UV-sensitive fabric according to any one of claims 14-16 to produce clothing or garments.

**Patentansprüche**

**1.** Gesponnene Faser, aufweisend eine Cellulosefaser, die mit einem optisch aktiven Material dotiert ist, das durch die folgende Formel (I) dargestellt wird:

$$(M')_8(M''M''')_6O_{24}(X,X')_2 : M'''' \qquad \text{Formel (I)}$$

wobei

M' ein einatomiges Kation eines Alkalimetalls aus der Gruppe 1 des IUPAC-Periodensystems der Elemente darstellt;
M" ein dreiwertiges einatomiges Kation eines Elements aus der Gruppe 13 des IUPAC-Periodensystems der Elemente oder eines Übergangselements aus einer der Gruppen 3 bis 12 des IUPAC-Periodensystems der Elemente oder irgendeine Kombination solcher Kationen darstellt;
M''' ein einatomiges Kation eines Elements aus der Gruppe 14 des IUPAC-Periodensystems der Elemente, oder eines Elements, aus einer der Gruppen 13 und 15 des IUPAC-Periodensystems der Elemente, oder von Zn oder irgendeine Kombination solcher Kationen darstellt;
X ein Anion eines Elements, aus der Gruppe 17 des IUPAC-Periodensystems der Elemente, oder irgendeine Kombination solcher Anionen darstellt, oder wobei X fehlt;
X' ein Anion eines oder mehrerer Elemente der Gruppe 16 des IUPAC-Periodensystems der Elemente oder irgendeine Kombination solcher Anionen darstellt, oder wobei X' fehlt; und
M'''' ein Dotierkation eines Elements, aus Seltenerdmetallen des IUPAC-Periodensystems der Elemente oder aus Übergangsmetallen des IUPAC-Periodensystems der Elemente oder aus Ba, Sr, Tl, Pb oder Bi oder irgendeine Kombination solcher Kationen, darstellt, oder wobei M'''' fehlt;
mit der Maßgabe, dass mindestens eines von X und X' vorhanden ist.

2. Gesponnene Faser nach Anspruch 1, wobei M' ein einatomiges Kation eines Alkalimetalls aus der Gruppe 1 des IUPAC-Periodensystems der Elemente oder eine beliebige Kombination solcher Kationen darstellt, mit der Maßgabe, dass M' nicht das einatomige Kation von Na allein darstellt.

3. Gesponnene Faser nach Anspruch 1, wobei M' eine Kombination aus mindestens zwei einatomigen Kationen verschiedener Alkalimetalle darstellt, aus der Gruppe 1 des IUPAC-Periodensystems der Elemente.

4. Gesponnene Faser nach Anspruch 1, wobei M' eine Kombination aus mindestens zwei einatomigen Kationen verschiedener Alkalimetalle darstellt, aus einer Gruppe, die aus Li, Na, K, Rb, Cs und Fr besteht.

5. Gesponnene Faser nach Anspruch 1, wobei M' ein einatomiges Kation eines Metalls darstellt, aus einer Gruppe, die aus Li, K, Rb, Cs, Fr besteht, oder irgendeine Kombination solcher Kationen.

6. Gesponnene Faser nach Anspruch 1, wobei M' eine Kombination aus mindestens zwei einatomigen Kationen unterschiedlicher Metalle darstellt, wobei mindestens ein Metall aus der Gruppe 1 des IUPAC-Periodensystems der Elemente ist.

7. Gesponnene Faser nach einem der vorhergehenden Ansprüche, wobei die Faser das optisch aktive Material in einer Menge von 0,1 Gew.-% bis 20 Gew.-% enthält.

8. Gesponnene Faser nach einem der vorhergehenden Ansprüche, wobei das optisch aktive Material gemahlen ist.

9. Gesponnene Faser nach einem der vorhergehenden Ansprüche, wobei die Faser eine Doppelbrechung von 0,04 bis 0,06 aufweist, wie nach dem in der Beschreibung angegebenen Verfahren gemessen.

10. Gesponnene Faser nach einem der vorhergehenden Ansprüche, wobei der Reflexionsgrad der Faser 75 bis 100 % beträgt, wie nach dem in der Beschreibung angegebenen Verfahren gemessen.

11. Gesponnene Faser nach einem der vorhergehenden Ansprüche, wobei die Faser photochrom ist.

12. UV-empfindliches Garn, das die gesponnene Faser nach einem der vorhergehenden Ansprüche aufweist.

13. UV-empfindliches Garn nach Anspruch 12, wobei das einen Reflexionsgrad von 10 bis 100 % aufweist, wie nach dem in der Beschreibung angegebenen Verfahren gemessen.

14. UV-empfindlicher Stoff, der das Garn aus einem der Ansprüche 12 bis 13 aufweist, wobei der Stoff eine Abriebfestigkeit von mindestens 15.000 Scheuertouren aufweist, wie nach dem in der Beschreibung angegebenen Verfahren gemessen.

15. UV-empfindlicher Stoff nach Anspruch 14, wobei der Stoff nach 2000 Scheuertouren ein Pillnote von mindestens 4, einen Fusselgrad von mindestens 4 und einen Verfilzungsgrad von mindestens 3,5 aufweist, wie nach dem in der Beschreibung angegebenen Verfahren gemessen.

16. UV-empfindlicher Stoff nach einem der Ansprüche 14 bis 15, wobei der Stoff nach dem Waschen mindestens 95 % seines ursprünglichen Reflexionsgrads beibehält, wie nach dem in der Beschreibung angegebenen Verfahren gemessen.

17. Verfahren zur Herstellung der gesponnenen Faser nach einem der Ansprüche 1 bis 11, wobei das Verfahren aufweist:

- Dispergieren einer optisch aktiven Verbindung in einer Suspension aus nanofibrillierter Cellulose,
- Zugabe einer ionischen Flüssigkeit zu der Dispersion,
- Ultraschallbehandlung der Dispersion,
- Spinnen einer Faser aus der Dispersion,
- Waschen der Faser mit Wasser und
- Trocknenlassen der Faser.

18. Verfahren nach Anspruch 17, wobei die optisch aktive Verbindung vor dem Dispergieren in der IL 1 bis 30 Minuten lang gemahlen wird.

**19.** Verfahren nach einem der Ansprüche 17 bis 18, wobei die IL aus der Gruppe bestehend aus ionischen Flüssigkeiten wie [DBNH] [OAc], [DBUH] [OAc], [mTBDH] [OAc] und anderen ionischen Flüssigkeiten, die Cellulose lösen (wie beispielsweise ILs auf Imidazoliumbasis), ist.

**20.** Verfahren nach einem der Ansprüche 17 bis 19, wobei die Faser unter Verwendung eines Nassspinnverfahrens oder eines Trocken-NassSpinnverfahrens gesponnen wird.

**21.** Verwendung einer gesponnenen Faser gemäß einem der Ansprüche 1 bis 11 oder hergestellt gemäß dem Verfahren nach einem der Ansprüche 17 bis 20, eines UV-empfindlichen Garns gemäß einem der Ansprüche 12 bis 13, oder eines UV-empfindlichen Stoffs gemäß einem der Ansprüche 14 bis 16 zur Herstellung von Bekleidung oder Kleidungsstücken.

**Revendications**

**1.** Fibre filée comprenant une fibre de cellulose dopée avec un matériau optiquement actif représenté par la formule (I) suivante

$$(M')_8(M"M''')_6O_{24}(X,X')_2:M'''' \qquad \text{formule (I)}$$

dans laquelle

M' représente un cation monoatomique d'un métal alcalin sélectionné dans le groupe 1 du tableau périodique des éléments de l'UICPA ;

M" représente un cation monoatomique trivalent d'un élément sélectionné dans le groupe 13 du tableau périodique des éléments de l'UICPA, ou d'un élément de transition sélectionné dans l'un quelconque des groupes 3 à 12 du tableau périodique des éléments de l'UICPA, ou toute combinaison de ces cations ;

M''' représente un cation monoatomique d'un élément sélectionné dans le groupe 14 du tableau périodique des éléments de l'UICPA, ou d'un élément sélectionné dans l'un quelconque des groupes 13 et 15 du tableau périodique des éléments de l'UICPA, ou de Zn, ou toute combinaison de ces cations ;

X représente un anion d'un élément sélectionné dans le groupe 17 du tableau périodique des éléments de l'UICPA, ou toute combinaison de ces anions, ou dans laquelle X est absent ;

X' représente un anion d'un ou plusieurs éléments sélectionnés dans le groupe 16 du tableau périodique des éléments de l'UICPA, ou toute combinaison de ces anions, ou dans lequel X' est absent ; et

M'''' représente un cation dopant d'un élément sélectionné parmi les terres rares du tableau périodique des éléments de l'UICPA, ou parmi les métaux de transition du tableau périodique des éléments de l'UICPA, ou de Ba, Sr, TI, Pb ou Bi, ou toute combinaison de ces cations, ou dans laquelle M'''' est absent ;

à condition qu'au moins un parmi X et X' soit présent.

**2.** Fibre filée selon la revendication 1, dans laquelle M' représente un cation monoatomique d'un métal alcalin sélectionné dans le groupe 1 du tableau périodique des éléments de l'UICPA, ou toute combinaison de ces cations, à condition que M' ne représente pas le cation monoatomique de Na seul.

**3.** Fibre filée selon la revendication 1, dans laquelle M' représente une combinaison d'au moins deux cations monoatomiques de métaux alcalins différents sélectionnés dans le groupe 1 du tableau périodique des éléments de l'UICPA.

**4.** Fibre filée selon la revendication 1, dans laquelle M' représente une combinaison d'au moins deux cations monoatomiques de métaux alcalins différents sélectionnés dans un groupe consistant en Li, Na, K, Rb, Cs et Fr.

**5.** Fibre filée selon la revendication 1, dans laquelle M' représente un cation monoatomique d'un métal sélectionné dans un groupe consistant en Li, K, Rb, Cs, Fr, ou toute combinaison de ces cations.

**6.** Fibre filée selon la revendication 1, dans laquelle M' représente une combinaison d'au moins deux cations monoatomiques de métaux différents, dans laquelle au moins un métal est sélectionné dans le groupe 1 du tableau périodique des éléments de l'UICPA.

**7.** Fibre filée selon l'une quelconque des revendications précédentes, dans laquelle la fibre comprend le matériau optiquement actif en une quantité qui est de 0,1 % en poids à 20 % en poids.

8. Fibre filée selon l'une quelconque des revendications précédentes, dans laquelle le matériau optiquement actif est broyé.

9. Fibre filée selon l'une quelconque des revendications précédentes, dans laquelle la fibre présente une biréfringence de 0,04 à 0,06 , telle que mesurée par le procédé dans la description.

10. Fibre filée selon l'une quelconque des revendications précédentes, dans laquelle la réflectance de la fibre est de 75 à 100 %, telle que mesurée par le procédé dans la description.

11. Fibre filée selon l'une quelconque des revendications précédentes, dans laquelle la fibre est photochromique.

12. Fil sensible aux UV comprenant la fibre filée selon l'une quelconque des revendications précédentes.

13. Fil sensible aux UV selon la revendication 12, dans lequel le présente une réflectance de 10 à 100 %, telle que mesurée par le procédé dans la description.

14. Tissu sensible aux UV comprenant le fil selon l'une quelconque des revendications 12 à 13, dans lequel le tissu présente une résistance à l'abrasion d'au moins 15 000 frottements, telle que mesurée par le procédé dans la description.

15. Tissu sensible aux UV selon la revendication 14, dans lequel le tissu présente un grade de boulochage d'au moins 4 après 2 000 frottements, un grade de formation de duvet d'au moins 4 après 2 000 frottements, et un grade de feutrage d'au moins 3,5 après 2 000 frottements, tels que mesuré par le procédé dans la description.

16. Tissu sensible aux UV selon l'une quelconque des revendications 14 à 15, dans lequel le tissu conserve au moins 95 % de sa réflectance d'origine après lavage, telle que mesurée par le procédé dans la description.

17. Procédé de production de la fibre filée selon l'une quelconque des revendications 1 à 11, dans lequel le procédé comprend :

- la dispersion d'un composé optiquement actif dans une suspension de cellulose nanofibrillée,
- l'ajout d'un liquide ionique à la dispersion,
- la sonification de la dispersion,
- le filage d'une fibre à partir de la dispersion,
- le lavage de la fibre avec de l'eau, et
- le fait de laisser sécher la fibre.

18. Procédé selon la revendication 17, dans lequel le composé optiquement actif est broyé pendant 1 à 30 minutes avant d'être dispersé dans l'IL.

19. Procédé selon l'une des revendications 17 à 18, dans lequel l'IL est sélectionné dans le groupe consistant en les liquides ioniques tels que [DBNH] [OAc], [DBUH] [OAc], [mTBDH] [OAc], et les autres liquides ioniques qui dissolvent la cellulose (tels que les IL à base d'imidazolium).

20. Procédé selon l'une quelconque des revendications 17 à 19, dans lequel la fibre est filée au moyen d'un procédé de filage par voie humide ou d'un procédé de filage par voie sèche-humide.

21. Utilisation d'une fibre filée selon l'une quelconque des revendications 1 à 11 ou produite selon le procédé de l'une quelconque des revendications 17 à 20, d'un fil sensible aux UV selon l'une quelconque des revendications 12 à 13, ou d'un tissu sensible aux UV selon l'une quelconque des revendications 14 à 16 pour produire des vêtements ou des articles vestimentaires.

Tip sonicating
optically active
compound-CNF
solution and IL

⬇

Add 13 wt-%
of cellulose
pulp and mix
for 2-2.5 h

⬇

Filtration

⬇

Rheology

⬇

Spinning

⬇

Washing and
air-drying
fibers

⬇

Characteriza-
tion

**Fig. 1**

Fig. 2

Fig. 3

**Fig. 4**

**Fig. 5**

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3795653 A1
- WO 2018142025 A1
- WO 2018138416 A1
- WO 2018115584 A1

**Non-patent literature cited in the description**

- **NORRBO, I.** ; **GLUCHOWSKI, P** ; **PATURI, P** ; **SINKKONEN, J.** ; **LASTUSAARI, M.** Persistent Luminescence of Tenebrescent Na8Al6-Si6O24(Cl,S)2: Multifunctional Optical Markers.. *Inorg. Chem.*, 2015, vol. 54, 7717-7724

- **ARMSTRONG, J.A.** ; **WELLER, J.A.** Structural Observation of Photochromism.. *Chem. Commun.*, 2006, 1094-1096